(19) Europäisches Patentamt
European Patent Office
Office européen des brevets

(11) **EP 2 847 365 B1**

(12) **EUROPEAN PATENT SPECIFICATION**

(45) Date of publication and mention
of the grant of the patent:
**11.07.2018 Bulletin 2018/28**

(21) Application number: **13787749.4**

(22) Date of filing: **08.05.2013**

(51) Int Cl.:
***C23F 11/167*** (2006.01)    ***C02F 5/14*** (2006.01)

(86) International application number:
**PCT/US2013/040123**

(87) International publication number:
**WO 2013/169894 (14.11.2013 Gazette 2013/46)**

(54) **SULFATE SCALE CONTROL IN LOW PH AQUEOUS SYSTEMS**

KONTROLLE VON ABLAGERUNGEN IN WÄSSRIGEN SYSTEMEN MIT NIEDRIGEM PH-WERT

CONTRÔLE DU TARTRE SULFATÉ DANS DES SYSTÈMES AQUEUX À PH BAS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.05.2012 US 201261644529 P**

(43) Date of publication of application:
**18.03.2015 Bulletin 2015/12**

(73) Proprietor: **Solenis Technologies Cayman, L.P.
8200 Schaffhausen (CH)**

(72) Inventors:
• **BORKAR, Sachin
New Castle, DE 19808 (US)**
• **BLUEMLE, Michael, James
New Castle, DE 19803 (US)**
• **ANDERMANN, Lawrence, J.
New Castle, DE 19808 (US)**

(74) Representative: **LKGLOBAL
Lorenz & Kopf PartG mbB Patentanwälte
Brienner Straße 11
80333 München (DE)**

(56) References cited:
EP-A1- 1 887 011    WO-A1-2005/082793
US-A- 3 633 672    US-A1- 2002 094 299
US-A1- 2009 294 373    US-A1- 2010 163 494
US-B1- 6 173 780

## Description

## BACKGROUND OF THE INVENTION

Field of the Invention

The invention relates to inhibition of hard, adherent deposit formation of insoluble metal salts particularly sulfates of metals such as calcium, and/or other alkaline earth metals, in presence of late transition metals in low pH aqueous systems, i.e. highly acidic aqueous systems. In particular organic phosphonates are used, either alone or with inorganic phosphonates and/or polymeric dispersants for scale control in aqueous systems.

The Related Art

Increased maintenance costs, decreased plant throughput, equipment downtime and safety are a few problems associated with scale deposition in industrial processes. The deposition and accumulation of inorganic salts on surfaces, due to changes in temperature, pressure, or pH, lowers equipment efficiency and facilitates corrosive processes. In many instances, these deposits are hard and need to be removed manually, which creates additional safety concerns and also adds significant cost due to production downtime. In recent years, there has been an increasing demand for chemicals to remove soluble salts, suppress precipitation or alter the crystal morphology to avoid deposition.

Certain organic and inorganic phosphonates have been used, either alone or with polymers, as scale control or inhibition agents but the effectiveness of such phosphonates is limited to systems having pH above 4 or 5. Additionally, low molecular weight polymeric scale control agents, including those bearing carboxylic acid or sulfonic acid functionality, typically perform very poorly in low pH systems which can be attributed to the low dissociation constants (pKa) of such polymers. Because conventional scale control agents have operational limits with respect to pH, phosphonate based agents including those comprising phosphonate and polymer, for use in highly acidic systems, such as those having pH less than about 4, to suppress scale deposition, including by threshold inhibition or crystal habit modification, are highly desired. Such scale control agents would be useful in mining applications which involve wide ranges of pH, temperature, and pressure depending on the type of ore subjected to mineral processing. US2002/094299 discloses the use of scale control agents comprising organic phosphonates for inhibiting scale formation or deposition in acidic aqueous systems.

## SUMMARY OF THE INVENTION

The scale control agents comprising bis(hexamethylenetriaminepenta (methylenephosphonic acid)) (BHMTAP) are applied to inhibit hard, adherent deposit formation of insoluble metal salts particularly sulfates of metals such as calcium, and/or other alkaline earth metals in presence of late transition metals. These agents may be applied on filter presses, weeping lines for heap leaches, pipes, holding vessels, evaporators, heat exchangers, cooling towers, boilers, autoclaves, or other sites that induce scale deposit formation in industrial processes.

The scale control agents comprise bis(hexamethylenetriaminepenta (methylenephosphonic acid)) (BHMTAP) either alone or in combination with inorganic phosphonates and/or polymeric dispersants. The scale control agent may further comprise polymers, such as low molecular weight polymeric dispersants. These additives are effective at scale control, such as inhibiting metal sulfate nucleation in highly acidic aqueous systems that may also have high concentrations of hardness, chloride, sulfate, organics, dissolved transition metals or corrosion inhibitors or insoluble solids or operate at high temperature, and pressure. These agents suppress calcium sulfate deposition through threshold inhibition and also by altering crystal morphology. The invention also concerns processes for inhibiting and/or removing scale from the surface of a substrate, such as process equipment, comprising adding the scale control agent to a highly acidic aqueous system in an effective amount to inhibit scale formation or deposition on a surface in contact with the highly acidic aqueous system. As used in this specification the term "low pH aqueous systems" or "highly acidic aqueous systems" means those aqueous systems having pH less than 2, including less than 1; including all points within these specified ranges.

All parts and percentages set forth in this specification and the appended claims are on a weight by weight basis unless otherwise specified.

## DESCRIPTION OF THE DRAWINGS

Fig. 1 is a graph showing the effect of water hardness on bis(hexamethylenetriaminepenta (methylenephosphonic acid))BHMTAP performance.

**Fig. 2** is a scanning electron microscope image of calcium sulfate crystal morphology with no additive treatment.

**Fig. 3** is a scanning electron microscope image of calcium sulfate crystal morphology treated with 100 parts per million (ppm) BHMTAP in accordance with an embodiment of the invention.

**Fig. 4** is a scanning electron microscope image of calcium sulfate crystal morphology treated with 50 ppm of scale control agent in accordance with an embodiment of the invention comprising KEMGUARD® 269 polymer (available from Kemira, Helsinki, Finland) and BHMTAP (Additive C).

**Fig. 5** is a scanning electron microscope image of calcium sulfate crystal morphology treated with 50 ppm of scale control agent in accordance with an embodiment of the invention comprising polymer of acrylic acid/maleic acid (poly(AA/MA)) and BHMTAP (Additive A).

## DETAILED DESCRIPTION OF THE INVENTION

The invention relates to the use of bis(hexamethylenetriaminepenta (methylenephosphonic acid)) (BHMTAP) for scale inhibition in highly acidic aqueous systems, such as process waters having soluble transition metals, high concentrations of hardness, sulfates, chlorides, organics, and salts. Typically the scale control agents comprise bis(hexamethylenetriaminepenta (methylenephosphonic acid)) (BHMTAP) and polymer, and may optionally comprise inorganic phosphonate. The invention further relates to processes for the inhibition of and/or removal of scale deposits, such as calcium sulfate scale, comprising adding the scale control agent to a highly acidic system, having a pH of 2 or less in an effective amount to inhibit the formation of scale on a surface in contact with the highly acidic aqueous system. Typically, the organic phosphonate is added to the highly acidic system in amounts of 10 parts per million (ppm) to 100 ppm preferably 10 ppm to 50 ppm and may be added in amounts of 5 ppm to 25 ppm.

The organic phosphonate used in the scale control agent is bis(hexamethylenetriaminepenta (methylenephosphonic acid))(BHMTAP). The low molecular weight polymeric dispersant typically comprises polymers derived from unsaturated monomers bearing one or more of the following functionalities: carboxylic acid, sulfonic acid, phosphonic acid, alcohol or amide, and their respective salts.

EXAMPLES

Example 1

Organic phosphonates bearing an alkyl amine spacer were employed alone and in combination with low molecular weight polymeric dispersants to inhibit calcium sulfate scale formation or deposition. The efficacy of organic phosphonates was studied and results are listed in Table 1. The efficacies of phosphonates alone were tested using highly acidic mimic process water having 5,000 ppm of calcium (as $CaCO_3$), 20,000 ppm of sulfate and 3,700 ppm of chloride ion. Solution A was prepared by dissolving 14.7 g of calcium chloride dihydrate and 0.713 g of anhydrous sodium chloride to a total volume of 1 liter using deionized (DI) water. Solution B was prepared by dissolving 14.306 g of anhydrous sodium sulfate and 31.32 g of concentrated sulfuric acid to a total volume of 1 liter using deionized ("DI") water. For scale control testing, an appropriate amount of the scale control additive was added to 50 mL of solution A and mixed thoroughly. The pH of the test water was maintained between 0.9-1.1. To this mixture, 50 mL of solution B was added and mixed for 2 hours at the desired temperature. On completion, the solutions were filtered and the filtrate was titrated with 0.2 M EDTA-$Na_4$ solution using CalVer 2 as indicator to determine the soluble calcium concentration. The results of these tests are summarized in Table 1.

Table. 1: Effect of organic phosphonates on calcium sulfate scale inhibition

| No. | Additive | Dose, ppm | Temperature, °C | % Inhibition |
|------|-----------|-----------|------------------|--------------|
| 1 | Blank | 0 | 50 | 48 |
| 2* | ATMP | 100 | 50 | 52 |
| 3* | ATMP | 200 | 50 | 56 |
| 4* | DETPMPA | 10 | 50 | 55 |
| 5* | DETPMPA | 25 | 50 | 69 |
| 6* | HMDTMPA | 10 | 50 | 78 |
| 7* | HMDTMPA | 25 | 50 | 99 |
| 8* | BHMTAP | 5 | 50 | 90 |

(continued)

| No. | Additive | Dose, ppm | Temperature, °C | % Inhibition |
|-----|----------|-----------|-----------------|--------------|
| 9 | BHMTAP | 10 | 50 | 99 |
| *Reference Example | | | | |

Tests performed with no scale control additive resulted in formation of calcium sulfate precipitate. Amino trimethylene phosphonic acid (ATMP) bearing three phosphonic acid groups showed increased inhibition compared to the blank control but had less inhibition than the other tested acids. Diethylenetriaminepentakis (methylphosphonic acid) (DETPMPA) containing five methyl phosphonic acid functionalities separated by ethylene diamine units showed better performance when compared with ATMP and the blank control. Use of phosphonates, hexamethylene diamine tetra (methylene phosphonic acid) (HMDTMPA) and bis(hexamethylenetriaminepenta(methylenephosphonic acid)), (BHMTAP) having six carbon spacer length showed the best performance. While the mechanism of scale inhibition by use of organic phosphonate has not been elucidated, the inventors without wishing to be bound by theory propose the efficacy of organic amino phosphonates is dependent on alkyl spacer length between nitrogen and phosphorus atom and also on number of methyl phosphonic acid groups.

Example 2

The efficacy of DETPMPA, HMDTMPA and BHMTAP in highly acidic mimic waters containing acidified solution of transition metal sulfates (Al, Cu, Fe, Mn etc) was studied. Solution C was prepared by dissolving 14.7 g of calcium chloride dihydrate and 12.2 g of 1 N hydrochloric acid to a total volume of 1 liter using DI water. Solution D mixed element water was prepared by dissolving metal sulfate of iron sulfate heptahydrate 0.7 g, aluminum sulfate octadecylhydrate 0.33 g, copper sulfate pentahydrate 2.72 g, manganese sulfate monohydrate 0.22 g and 40.32 g of concentrated sulfuric acid to a total volume of 1 liter using DI water. For scale control testing, an appropriate amount of the scale control additive was added to 50 mL of solution C and mixed thoroughly. The pH of the test water was maintained between 0.9 - 1.1. To this mixture, 50 mL of solution D was added and mixed for 2 hours at the desired temperature. On completion, the solutions were filtered through 45 micron syringe filter and filtrates were analyzed by using inductively coupled plasma - atomic emission spectroscopy (ICP-AES). The threshold inhibition was calculated by using following formula:

$$Percent\,Threshold\,Inhibition\,(\%Inb.) = \left(\left[\frac{Ca_{SITU} - Ca_{BLK}}{Ca_{TOTAL} - Ca_{BLK}}\right]\right) \bullet 100\%$$

Where, $Ca_{SITU}$ is amount of calcium in filtrate
$Ca_{BLK}$ is amount of calcium measured for filtrate obtained with no additive treatment
$Ca_{TOTAL}$ is amount of calcium in test water

Table 2: Effect of phosphonate on scale inhibition using mixed element water and ICP-AES measurement technique

| No. | Additive | Dose, ppm | Temperature, °C | % Inhibition |
|-----|----------|-----------|-----------------|--------------|
| 1* | DETPMPA | 25 | 50 | 10 |
| 2* | DETPMPA | 50 | 50 | 27 |
| 3* | HMDTMPA | 25 | 50 | 17 |
| 4* | HMDTMPA | 100 | 50 | 76 |
| 5 | BHMTAP | 10 | 50 | 82 |
| 6 | BHMTAP | 100 | 50 | 92 |
| *Reference Example | | | | |

Table 2 shows, performance of these phosphonates in presence of transition metal sulfates present in mimic water. Under the conditions listed in Table 2, DETPMPA and HMDTMPA experienced an effect in performance when evaluated with mimic waters containing soluble salts of transition metals. Whereas, changing the water chemistry of mimic test water, BHMTAP efficacy did not change significantly.

Example 3

The effect of temperature on BHMTAP performance was evaluated. Solution E was prepared by dissolving 14.7 g of calcium chloride dihydrate and 0.713 g of anhydrous sodium chloride to a total volume of 1 liter using DI water. Solution F was prepared by dissolving 14.306 g of anhydrous sodium sulfate and 31.32 g of concentrated sulfuric acid to a total volume of 1 liter using DI water. For scale control testing, an appropriate amount of the scale control additive was added to 50 mL of solution E and mixed thoroughly. The pH of the test water was maintained between 0.9 - 1.1. To this mixture, 50 mL of solution F was added and mixed for 2 hours at the desired temperature. On completion, the solutions were filtered and the filtrate was titrated with 0.2 M EDTA-Na$_4$ solution using CalVer 2 as indicator to determine the soluble calcium concentration. The results of these tests are summarized in Table 3

Table 3: Effect of temperature on BHMTAP performance

| No. | Additive | Dose, ppm | Temperature, °C | % Inhibition |
|-----|----------|-----------|-----------------|--------------|
| 1 | Blank | 0 | 25 | 39 |
| 2* | BHMTAP | 5 | 25 | 45 |
| 3 | BHMTAP | 10 | 25 | 79 |
| 4 | BHMTAP | 25 | 25 | 99 |
| 5 | Blank | 0 | 50 | 48 |
| 6* | BHMTAP | 5 | 50 | 90 |
| 7 | BHMTAP | 10 | 50 | 99 |
| 8 | Blank | 0 | 70 | 66 |
| 9* | BHMTAP | 5 | 70 | 90 |
| 10 | BHMTAP | 10 | 70 | 99 |
| *Reference Example | | | | |

The solubility of calcium sulfate in water is temperature dependent. The lower the temperature tested under these conditions, the stronger the thermodynamic driving force for precipitation. Thus, increasing amounts of calcium sulfate precipitation were observed with decreasing temperature. When solutions were charged with 10 ppm of additive at 25 °C, small amount of precipitate was observed after 2 hours. Similarly, the titrations performed on the filtrate suggested 79% of calcium remained in the solution. Further increase in additive concentration to 25 ppm showed no precipitate formation over 2 hours and titration of filtrate also shows 99% inhibition (Table 3). Further, when a similar experiment was performed at 70 °C, the temperature at which calcium sulfate is more soluble than ambient temperature, 10 ppm of BHMTAP additive was sufficient enough to achieve quantitative inhibition over 2 hours.

Example 4

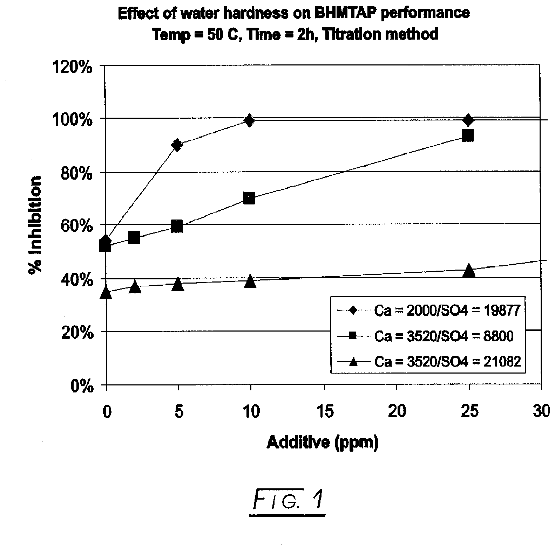

The effect of hardness was studied by varying the calcium ion concentration in water. The concentration of calcium, chloride and sulfate ion in solution G and H were maintained in such a way that on mixing 50 mL of each solution can lead into desired concentration of individual ion and pH in the test water. For scale control testing, an appropriate amount of the scale control additive was added to 50 mL of solution G and mixed thoroughly. To this mixture, 50 mL of solution H was added and mixed for 2 hours at the desired temperature. On completion, the solutions were filtered and the filtrate was titrated with 0.2 M EDTA-Na$_4$ solution using CalVer 2 as indicator to determine the soluble calcium concentration. The results of these tests are shown in **Fig. 1** which shows the plot of BHMTAP concentration as a function of threshold inhibition for water with three different levels of hardness. Increasing calcium ion concentration from 5,000 ppm to 8,800 ppm demands significantly higher dosage of additive to achieve quantitative inhibition. Runs performed using water with increased calcium concentration and lower sulfate concentration also require 25 ppm of additive to reach up to 97% inhibition.

Example 5

The effect of transition metal ions on BHMTAP performance was studied. Mimic waters with 5,000 ppm calcium as calcium carbonate, 20,000 ppm sulfate, and 7,000 ppm chloride were prepared. Solution J was prepared by dissolving 14.7 g of calcium chloride dihydrate and 0.713 g of anhydrous sodium chloride to a total volume of 1 liter using DI water. Solution K was prepared by dissolving 14.306 g of anhydrous sodium sulfate and 31.32 g of concentrated sulfuric acid to a total volume of 1 liter using DI water. 1% solutions of desired metal sulfate (Al, Cu, Fe, Mn and Zn) were prepared by dissolving respective amount of metal sulfate in 100 mL DI water. For scale control testing, an appropriate amount of the scale control additive (10 ppm) and metal sulfate solution were added to 50 mL of solution J and mixed thoroughly. The pH of the test water was maintained between 0.9 - 1.1. To this mixture, 50 mL of solution K was added and mixed for 2 hours at the desired temperature. On completion, the solutions were filtered through 45 micron syringe filter and filtrates were analyzed by using inductively coupled plasma- atomic emission spectroscopy (ICP-AES). The threshold inhibition was calculated by using formula applied in Example 2.

Table 4: Effect of metal sulfates on BHMTAP performance at 50 °C

| Expt. 1 | | Expt. 2 | | Expt. 3 | | Expt. 4 | | Expt. 5 | |
|---|---|---|---|---|---|---|---|---|---|
| Al (ppm) | % I | Fe (ppm) | % I | Cu (ppm) | % I | Zn (ppm) | % I | Mn (ppm) | % I |
| 0 | 99 | 0 | 99 | 0 | 99 | 0 | 99 | 0 | 99 |
| 25 | 98 | 100 | 99 | 1000 | 82 | 100 | 99 | 50 | 99 |
| 50 | 96 | 200 | 99 | 1500 | 81 | 250 | 99 | 100 | 99 |
| 100 | 98 | 500 | 39 | | - | 500 | 99 | 200 | 89 |

As shown in table 4, individual solution of metal sulfate salts were added to the mimic water discussed above to obtain a solution with desired concentration of each metal. The amount of additive added for each experiment was maintained as 10 ppm. The data presented in table 4 suggest higher concentrations of iron and copper affect the additive performance. Whereas, aluminum, manganese and zinc did not demonstrate appreciable change in BHMTAP performance.

Example 6

The performance of low molecular weight polymeric dispersant and BHMTAP blend was evaluated. Low molecular weight polymers derived from one or more than one of the following monomers vinyl sulfonate (SVS), allyl sulfonates (SAS), acrylic acid (AA), vinyl phosphonic acid and maleic acid (MA) or their salts were synthesized. Blends of above mentioned polymers or commercial polymer KEMGUARD® 269 with BHMTAP with three different ratios of 1:3, 1:1 and 3:1 w/w were prepared and their performances were evaluated using mimic process water with 8,800 ppm Ca as $CaCO_3$, 20,000 ppm sulfate and 7,400 ppm of chloride ion. Solution L was prepared by dissolving 25.1 g of calcium chloride dihydrate and 4.28 g of anhydrous sodium chloride to a total volume of 1 liter using DI water. Solution M was prepared by dissolving 14.31 g of anhydrous sodium sulfate and 31.32 g of concentrated sulfuric acid to a total volume of 1 liter using DI water. For scale control testing, an appropriate amount of the scale control additive was added to 50 mL of solution L and mixed thoroughly. The pH of the test water was maintained between 0.9 - 1.1. To this mixture, 50 mL of solution M was added and mixed for 2 hours at the desired temperature (50 °C), on completion the solutions were filtered and the filtrate was titrated with 0.2 M $EDTA-Na_4$ solution using CalVer 2 as indicator to determine the soluble calcium concentration. The results of these tests are summarized in table 5.

Table 5. Effect of low molecular weight polymer dispersant and BHMTAP blend

| No. | Additive | Dose, ppm | % Inhibition |
|---|---|---|---|
| 1 | | 0 | 40% |
| 2* | BHMTAP | 2 | 42% |
| 3* | BHMTAP | 5 | 44% |
| 4 | BHMTAP | 10 | 49% |
| 5 | BHMTAP | 25 | 58% |

(continued)

| No. | Additive | Dose, ppm | % Inhibition |
|---|---|---|---|
| 6 | BHMTAP | 50 | 82% |
| 7* | Additive A | 2 | 41% |
| 8* | Additive A | 5 | 43% |
| 9 * | Additive A | 10 | 44% |
| 10 | Additive A | 25 | 51% |
| 11 | Additive A | 50 | 68% |
| 12* | Additive B | 2 | 41% |
| 13* | Additive B | 5 | 42% |
| 14* | Additive B | 10 | 44% |
| 15 | Additive B | 25 | 53% |
| 16 | Additive B | 50 | 68% |
| 17* | Additive C | 2 | 41% |
| 18* | Additive C | 5 | 43% |
| 19 * | Additive C | 10 | 44% |
| 20 | Additive C | 25 | 56% |
| 21 | Additive C | 50 | 83% |
| Additive A = poly(AA/MA) + BHMTAP (1:3 w/w), Additive B = poly(SVS) + BHMTAP (1:3 w/w) and Additive C = KEMGUARD® 269 (from Kemira) + BHMTAP (1:3 w/w)<br>*Reference Example | | | |

Example 7

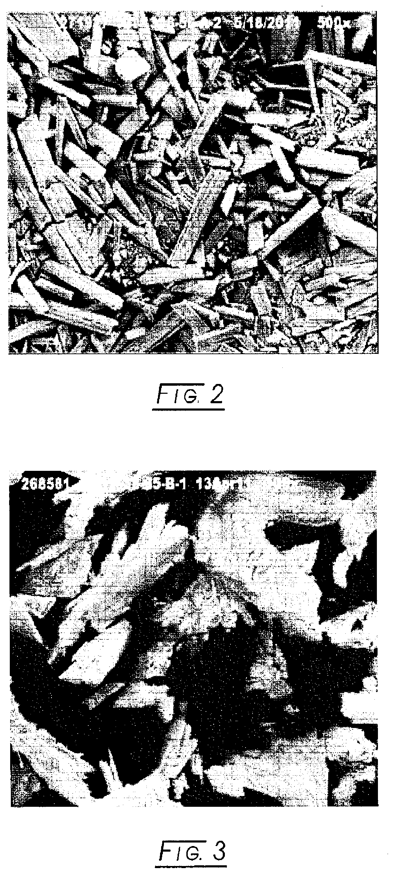

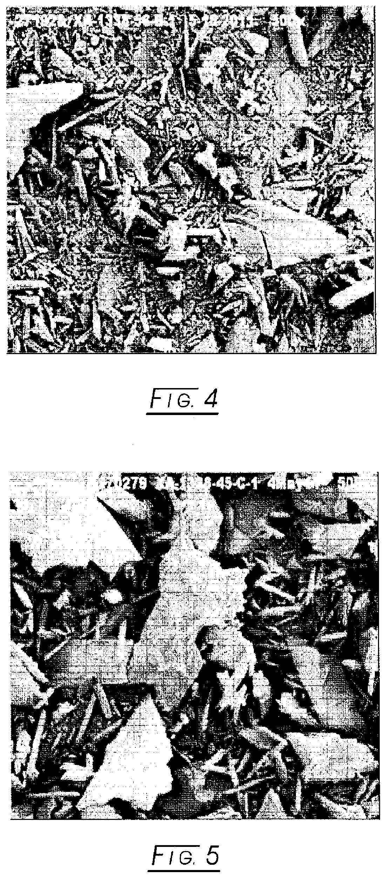

The effect of BHMTAP and its blends with polymeric dispersants as crystal habit modifier was studied by forcing scale formation with and without additive treatment. Scale formation with additive treatment was enhanced by using mimic water with mixed transition elements and by extending the experimental time. The crystal morphology of the obtained scale was observed under scanning electron microscope and the images are shown in **Figs. 2-5**. The scale obtained for the blank experiment (without any additive treatment) showed rod-shaped crystals (**Fig. 2**), whereas scale obtained with 100 ppm BHMTAP treatment showed significant change in crystal morphology (**Fig 3**). Similarly, the scale obtained using 50 ppm of Additive C of Example 6 (1:3 w/w blend of KEMGUARD® 269 and BHMTAP) (**Fig 4**) or Additive A of Example 6 (poly(AA/MA) and BHMTAP) (**Fig 5**) showed smaller crystals. This sludge like scale is less prone to accumulate and adhere on surface or to form deposits.

The scanning electron microscope observations can be further supported by particle size and aspect ratio measurement data shown in table 6. This data further suggests with increasing BHMTAP dosage the minimum particle size of the gypsum decreases.

Table 6: Morphologi G3i measurements on calcium sulfate scale obtained with BHMTAP treatment

| | Blank | 5 ppm BHMTAP* | 50 ppm BHMTAP |
|---|---|---|---|
| Length minimum ($\mu$m) | 6.74 | 6.11 | 6.09 |
| Length Maximum ($\mu$m) | 681.57 | 830.42 | 905.52 |
| Length Mean ($\mu$m) | 54.7 | 46.54 | 41.75 |
| 90% particles are < ($\mu$m) | 116.38 | 103.69 | 99.50 |
| Mean aspect ratio | 0.352 | 0.442 | 0.508 |
| *Reference Example | | | |

**Claims**

1. Use of a scale control agent for inhibiting scale formation or deposition in highly acidic aqueous systems, the scale control agent comprising organic phosphonate, wherein the organic phosphonate is bis(hexamethylenetriaminepenta (methylenephosphonic acid)) (BHMTAP) and the organic phosphonate is in an amount of from 10 ppm to 100 ppm of the total aqueous system; and wherein the highly acidic aqueous system has a pH less than 2.

2. The use of Claim 1 wherein the scale control agent further comprises inorganic phosphonates.

3. The use of Claim 1 wherein the scale control agent further comprises a polymer.

4. The use of Claim 3 wherein the polymer is a low molecular weight polymeric dispersant and comprises one or more than one functionality selected from the group consisting of carboxylic acid, sulfonic acid, phosphonic acid, alcohol, amide and salts thereof.

5. A process for inhibiting or preventing the formation of scale on a substrate having at least one surface in contact with a highly acidic aqueous system comprising adding a scale control agent to the highly acidic aqueous system in an effective amount to inhibit the formation of scale on the surface, wherein an organic phosphonate which is contained in the scale control agent is bis(hexamethylenetriaminepenta (methylenephosphonic acid)) (BHMTAP) and is added to the highly acidic aqueous system in an amount of from 10 ppm to 100 ppm and wherein the highly acidic aqueous system has a pH less than 2.

6. The process of Claim 5 wherein the scale comprises calcium sulfate.

7. The process of Claim 5 wherein the scale control agent further comprises an inorganic phosphonate.

8. The process of Claim 5 wherein the scale control agent further comprises a polymer.

9. The process of Claim 8 wherein the polymer comprises a functionality selected from the group consisting of carboxylic acid, sulfonic acid, alcohol, amide and salts thereof.


**Patentansprüche**

1. Verwendung eines Kesselsteinbekämpfungsmittels zum Hemmen von Kesselsteinbildung oder -ablagerung in stark sauren wässrigen Systemen, wobei das Kesselsteinbekämpfungsmittel organisches Phosphonat umfasst, wobei das organische Phosphonat Bis(hexamethylentriaminpenta(methylenphosphonsäure)) (BHMTAP) und das organische Phosphonat einen Anteil von 10 ppm bis 100 ppm des gesamten wässrigen Systems hat; und wobei das stark saure wässrige System einen pH-Wert von weniger als 2 aufweist.

2. Verwendung nach Anspruch 1, wobei das Kesselsteinbekämpfungsmittel ferner anorganisch Phosphonate umfasst.

3. Verwendung nach Anspruch 1, wobei das Kesselsteinbekämpfungsmittel ferner ein Polymer umfasst.

4. Verwendung nach Anspruch 3, wobei das Polymer ein polymeres Dispergens mit niedrigem Molekulargewicht ist und eine oder mehr als eine Funktionalität ausgewählt aus der Gruppe bestehend aus Carbonsäure, Sulfonsäure, Phosphonsäure, Alkohol, Amid und deren Salze umfasst.

5. Verfahren zum Hemmen oder Verhindern von Kesselsteinbildung auf einem Substrat, das mit mindestens einer Oberfläche in Kontakt mit einem stark sauren wässrigen System ist, umfassend das Hinzufügen einer Kesselsteinbekämpfungsmittels zu dem hochsauren wässrigen System in einer wirksamen Menge zum Hemmen der Bildung von Kesselsteinablagerungen auf der Oberfläche, wobei ein organisches Phosphonat, das in dem Kesselsteinbekämpfungsmittel enthalten ist, Bis(hexamethylentriaminpenta(methylenphosphonsäure)) (BHMTAP) ist und zu dem hochsauren wässrigen System in einer Menge von 10 ppm bis 100 ppm gegeben wird und wobei das stark saure wässrige System einen pH von weniger als 2 aufweist.

6. Verfahren nach Anspruch 5, wobei der Kesselstein Calciumsulfat umfasst.

**7.** Verfahren nach Anspruch 5, wobei das Kesselsteinbekämpfungsmittel ferner ein anorganisches Phosphonat umfasst.

**8.** Verfahren nach Anspruch 5, wobei das Kesselsteinbekämpfungsmittel ferner ein Polymer umfasst.

**9.** Verfahren nach Anspruch 8, wobei das Polymer eine Funktionalität ausgewählt aus der Gruppe bestehend aus Carbonsäure, Sulfonsäure, Alkohol, Amid und deren Salze umfasst.

**Revendications**

**1.** Utilisation d'un l'agent de contrôle d'entartrage pour inhiber la formation ou le dépôt de tartre dans des systèmes aqueux très acides, l'agent de contrôle d'entartrage comprenant du phosphonate organique, dans lequel le phosphonate organique est bis(hexaméthylènetriaminepenta(acide méthylènephosphonique)) (BHMTAP) et le phosphonate organique est dans une quantité de 10 ppm à 100 ppm du système aqueux total; et dans lequel le système aqueux très acide a un pH inférieur à 2.

**2.** Utilisation selon la revendication 1, dans laquelle l'agent de contrôle d'entartrage comprend en outre des phosphonates inorganiques.

**3.** Utilisation selon la revendication 1, dans laquelle l'agent de contrôle d'entartrage comprend en outre un polymère.

**4.** Utilisation selon la revendication 3, dans laquelle le polymère est un dispersant polymère de bas poids moléculaire et comprend une ou plusieurs fonctionnalités choisies dans le groupe constitué par l'acide carboxylique, l'acide sulfonique, l'acide phosphonique, l'alcool, l'amide et leurs sels.

**5.** Procédé pour inhiber ou empêcher la formation de tartre sur un substrat ayant à au moins une surface en contact avec un système aqueux très acide comprenant l'agent de contrôle d'entartrage du système aqueux très acide dans une quantité efficace pour inhiber la formation d'une tartre sur la surface, dans laquelle un phosphonate organique contenu dans le l'agent de contrôle d'entartrage est bis(hexaméthylènetriaminepenta(acide méthylènephosphonique)) (BHMTAP) et est ajouté au système aqueux très acide en une quantité de 10 ppm à 100 ppm et dans lequel le système aqueux très acide a un pH inférieur à 2.

**6.** Procédé selon la revendication 5, dans lequel le tartre comprend du sulfate de calcium.

**7.** Procédé selon la revendication 5, dans lequel l'agent de contrôle d'entartrage comprend en outre un phosphonate inorganique.

**8.** Procédé selon la revendication 5, dans lequel l'agent de contrôle d'entartrage comprend en outre un polymère.

**9.** Procédé selon la revendication 8, dans lequel le polymère comprend une fonctionnalité choisie parmi le groupe comprenant l'acide carboxylique, l'acide sulfonique, l'alcool, l'amide et leurs sels.

Effect of water hardness on BHMTAP performance
Temp = 50 C, Time = 2h, Titration method

FIG. 1

FIG. 2

FIG. 3

*FIG. 4*

*FIG. 5*

**EP 2 847 365 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002094299 A